(19) Europäisches Patentamt
European Patent Office
Office européen des brevets

(11) **EP 3 044 073 B1**

(12) **FASCICULE DE BREVET EUROPEEN**

(45) Date de publication et mention
de la délivrance du brevet:
**03.05.2017 Bulletin 2017/18**

(51) Int Cl.:
***B62D 15/02*** *(2006.01)*

(21) Numéro de dépôt: **14786991.1**

(22) Date de dépôt: **01.09.2014**

(86) Numéro de dépôt international:
**PCT/FR2014/052152**

(87) Numéro de publication internationale:
**WO 2015/036675 (19.03.2015 Gazette 2015/11)**

(54) **PROCÉDÉ DE CALCUL EN TEMPS RÉEL DE LA POSITION ABSOLUE D'UN ORGANE DE DIRECTION ASSISTÉE A PRÉCISION AMÉLIORÉE**

VERFAHREN ZUR ECHTZEITBERECHNUNG DER ABSOLUTEN POSITION EINES SERVOLENKUNGSELEMENTS MIT ERHÖHTER GENAUIGKEIT

METHOD FOR CALCULATING, IN REAL TIME, THE ABSOLUTE POSITION OF A POWER STEERING MEMBER WITH IMPROVED ACCURACY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2013 FR 1358705**

(43) Date de publication de la demande:
**20.07.2016 Bulletin 2016/29**

(73) Titulaire: **JTEKT Europe**
**69540 Irigny (FR)**

(72) Inventeurs:
• **PREGNIARD, Romaric**
**F-69360 St Symphorien d'Ozon (FR)**
• **BASTIEN, Loïc**
**F-69005 Lyon (FR)**
• **RAVIER, Christophe**
**F-69780 Saint Pierre de Chandieu (FR)**
• **BOURDREZ, Sébastien**
**F-69510 Yzeron (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**DE-A1-102012 002 772**

**Description**

La présente invention concerne le domaine général des dispositifs de direction assistée destinés à équiper des véhicules automobiles, et plus particulièrement celui des dispositifs de direction assistée comprenant un volant de conduite ainsi qu'un moteur d'assistance qui permettent de transmettre un effort d'entraînement à une crémaillère de direction, elle-même montée coulissante dans un carter de direction et reliée aux roues directrices par des biellettes de direction.

Dans le secteur automobile, on assiste depuis plusieurs années à une multiplication et à une généralisation des systèmes d'assistance électronique embarqués conçus pour contrôler le comportement dynamique des véhicules, à des fins de sécurité, tels que les systèmes de contrôle de trajectoire (ESP) ou de freinage (ABS).

Or, le bon fonctionnement de tels systèmes de contrôle requiert généralement une connaissance précise, en temps réel, de l'orientation des roues directrices du véhicule.

Il est connu à cet effet de mesurer, à l'aide d'un capteur approprié, la position angulaire instantanée de l'arbre du moteur d'assistance de direction, puis d'en déduire, en connaissant le rapport de démultiplication du réducteur qui relie le moteur à la colonne de direction, la position angulaire du volant de conduite, cette position angulaire du volant étant considérée comme représentative de la position de la crémaillère de direction, et donc de l'angle de braquage des roues.

Cependant, les inventeurs on constaté qu'une telle méthode d'évaluation par calcul de la position des organes de la direction, et plus particulièrement du volant, peut être relativement imprécise, selon les différentes situations de vie du véhicule, l'erreur d'estimation (rapportée en amplitude équivalente de rotation du volant) pouvant atteindre en pratique plus d'une dizaine de degrés.

A titre d'exemple, les inventeurs ont notamment mené l'expérience suivante : ils ont utilisé, au niveau du volant d'un mécanisme de direction, un capteur angulaire de position dont la précision était de 1 (un) degré. Ledit volant entraînait une crémaillère par l'intermédiaire d'un pignon, selon une liaison pignon/crémaillère qui possédait un rapport de transmission théorique de 50 mm/tour (la crémaillère étant censée se déplacer linéairement en translation de 50 mm lorsque le pignon effectue un tour complet). Au regard de ce rapport de transmission, et en considérant la précision du capteur de position angulaire du volant l'erreur absolue d'estimation de la position linéaire de la crémaillère aurait dû être en principe de l'ordre de : 1 deg / (360 deg/tour) * 50 mm/tour = 0,14 mm.

Or, les inventeurs ont constaté que, en situation de braquage intense, c'est-à-dire lorsqu'un effort important était appliqué sur le volant (par exemple pour simuler une manoeuvre de dégagement ou de sortie de stationnement), ladite erreur d'estimation de position de la crémaillère, c'est-à-dire l'écart entre la position réelle (en translation) de la crémaillère et la position théorique de ladite crémaillère calculée d'après la position mesurée du volant, pouvait atteindre plus de 1 mm, soit une valeur près de sept fois supérieure à l'erreur théoriquement prévue.

En pratique, sur une direction neuve dont le volant est soumis à un couple de braquage élevé, de l'ordre de 10 N.m, une telle erreur équivaut à un écart angulaire de dix degrés entre la position de consigne donnée par le volant et la position effective de la crémaillère (exprimée sous forme d'une position angulaire dans le référentiel angulaire du volant).

On comprend alors qu'une telle incertitude ne permet pas de garantir une fiabilité et une efficacité optimales des systèmes de contrôle de trajectoire ou de freinage susmentionnés.

En outre, s'il est envisageable, dans l'absolu, d'accroître la précision de la mesure de la position angulaire d'un organe par l'utilisation d'un capteur dédié, situé au niveau de l'organe dont on souhaite connaître avec précision la position, une telle solution représente en pratique un surcoût important, ainsi qu'une augmentation de masse et de volume du système de direction, ce qui va à l'encontre des objectifs d'allègement et de réduction des coûts constamment poursuivis par les constructeurs automobiles.

On connaît par ailleurs, par le document DE-10 2012 002772, un procédé de détermination de la position d'un organe mobile de direction selon le préambule de la revendication 1.

Les objets assignés à l'invention visent par conséquent à remédier aux inconvénients susmentionnés et à proposer un nouveau moyen d'évaluation de la position d'un organe de direction assistée qui présente une précision et une fiabilité accrue, tout en étant particulièrement simple et peu onéreux à mettre en oeuvre.

Les objets assignés à l'invention sont atteints au moyen d'un procédé de détermination de la position d'un organe mobile de direction appartenant à un mécanisme de direction de véhicule qui comprend au moins un premier organe mobile, tel qu'un arbre de moteur d'assistance de direction, ainsi qu'un second organe mobile, distinct du premier, tel qu'une crémaillère, qui coopèrent l'un avec l'autre par l'intermédiaire d'au moins une première liaison permettant une transmission d'effort et de mouvement entre le premier organe et le second organe, ledit procédé comprenant une étape (a) d'acquisition d'une position de référence, au cours de laquelle on mesure la position instantanée du premier organe par rapport à une origine prédéterminée, puis une étape (b) de conversion au cours de laquelle on calcule la position instantanée du second organe à partir de la position instantanée du premier organe, ledit procédé étant caractérisé en ce qu'il comprend une étape (c) de mesure de contrainte, au cours de laquelle on recueille une valeur de contrainte représentative de l'effort instantané transmis entre le premier et le second organe à travers la première liaison, puis une étape (d) de correction au cours de laquelle on adapte l'étape (b) de conversion en fonction de ladite valeur de contrainte, afin de prendre en considération, dans le calcul de la position du second organe, un décalage de position du second organe par rapport au premier organe qui résulte de la déformation élastique de la première liaison sous l'effet de l'effort transmis par cette dernière.

Les inventeurs ont en effet découvert que l'imprécision dont souffrent les procédés connus d'estimation de position trouve essentiellement son origine dans le caractère élastique (déformable sous contrainte) des liaisons mécaniques entre les organes mobiles de direction, telles que les liaisons d'engrènement entre pignon(s) et crémaillère.

Plus particulièrement, l'approche conventionnelle jusqu'ici retenue considère implicitement, en première approximation, que les liaisons entre les organes de direction sont cinématiquement idéales, et font intervenir des organes infiniment rigides, de telle sorte que la position du second organe, en sortie de liaison, est l'image exacte de la position du premier organe en entrée de liaison, au rapport de transmission près (lequel est caractérisé par la géométrie de la liaison).

De fait, les procédés connus négligent certains facteurs pourtant susceptibles d'influencer, dans certaines circonstances, le positionnement relatif des organes de direction, et ne tiennent en particulier aucun compte de la souplesse inhérente aux liaisons (et à leurs organes constitutifs), laquelle est pourtant de nature à fausser les calculs, en particulier lorsque la direction travaille sous fortes contraintes.

Avantageusement, le procédé conforme à l'invention permet donc de compléter l'approche conventionnelle susmentionnée par l'ajout, dans le calcul de la position du second organe, d'une correction, variable selon le niveau d'effort transmis par la liaison, afin de tenir compte du caractère élastique de la liaison réelle et d'inclure ainsi dans ledit calcul la contribution éventuelle d'une déformation sous contrainte de ladite liaison (et, plus particulièrement, des organes qui constituent ladite liaison).

La prise en considération et la quantification du phénomène de déviation élastique de la liaison et de l'influence concrète de ce phénomène sur le positionnement du second organe par rapport au premier organe permet ainsi avantageusement de calculer la position effective dudit second organe avec une précision accrue, dès lors que l'on connaît d'une part la position du premier organe (et donc la configuration géométrique dans laquelle se trouve la liaison), et d'autre part l'état de contrainte de la liaison ainsi que le comportement élastique (la « souplesse ») de ladite liaison, qui permet d'associer une déformation quantifiée à l'état de contrainte considéré (un tel comportement élastique pouvant notamment être caractérisé au moyen d'un abaque obtenu par une simulation ou une campagne d'essais).

Plus globalement, il est remarquable que le procédé conforme à l'invention permet de calculer avec précision, et sans requérir le moindre capteur additionnel, la position de tout organe appartenant à la chaîne cinématique de manoeuvre de la direction, en n'importe quel point de ladite chaîne cinématique, et ce quel que soit le nombre de liaisons successives que compte ladite chaîne cinématique, pourvu que l'on connaisse premièrement une (une seule suffit) position de référence en un premier point de ladite chaîne, deuxièmement les caractéristiques cinématiques (rapports de transmission théorique idéaux) de la ou des liaisons de ladite chaîne, et troisièmement, pour chaque liaison (ou pour l'ensemble des liaisons considérées comme un tout) comprise entre le premier point dont on connaît la position de référence et le second point dont on souhaite calculer la position, l'état des contraintes de transmission exercées sur la liaison (ou l'ensemble de liaisons) et la « souplesse » de ladite liaison (ou de l'ensemble de liaisons) sous forme d'une loi ou d'une courbe caractéristique de l'élasticité de la liaison (ou de l'ensemble de liaisons).

De façon particulièrement avantageuse, le procédé conforme à l'invention permettra notamment de calculer à moindre coût et avec une grande précision, typiquement avec une erreur absolue inférieure ou égale à 1 (un) degré, la position angulaire du volant de conduite et/ou la position de la crémaillère (ramenée par équivalence à une position angulaire dans le référentiel de la colonne de direction).

La faiblesse du coût sera notamment liée au fait que le calcul peut être effectué à partir de signaux déjà présents sur le réseau électronique de bord du véhicule, voire sur le réseau du système de direction lui-même, tels que la position de l'arbre du moteur d'assistance, la consigne de couple d'assistance appliquée par ledit moteur, et/ou le couple volant exercé manuellement par le conducteur.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre un exemple de mécanisme de direction assistée à double pignon auquel peut s'appliquer un procédé conforme à l'invention.
La figure 2 illustre, selon une vue schématique, le principe de décomposition, en une succession d'organes et de liaisons, d'une chaîne cinématique de mécanisme de direction, pour la mise en oeuvre d'un procédé conforme à l'invention.
La figure 3 illustre, selon un schéma-bloc fonctionnel, un exemple de principe de mise en oeuvre du calcul des positions d'organes de direction, en référence préférentielle à la chaîne cinématique de la figure 2 appliquée au mécanisme de la figure 1.
La figure 4 illustre un exemple d'abaque d'élasticité (dit « première courbe de souplesse ») caractéristique de la déformation élastique sous contrainte du mécanisme de la figure 1 au niveau d'une première liaison (ici, entre le moteur d'assistance et la crémaillère, *via* un premier pignon).

La figure 5 illustre un autre exemple d'abaque d'élasticité (dit « seconde courbe de souplesse ») caractéristique de la déformation élastique sous contrainte du mécanisme de la figure 1 au niveau d'une seconde liaison (ici entre la crémaillère et un second pignon solidaire de la colonne de direction qui porte le volant de conduite).

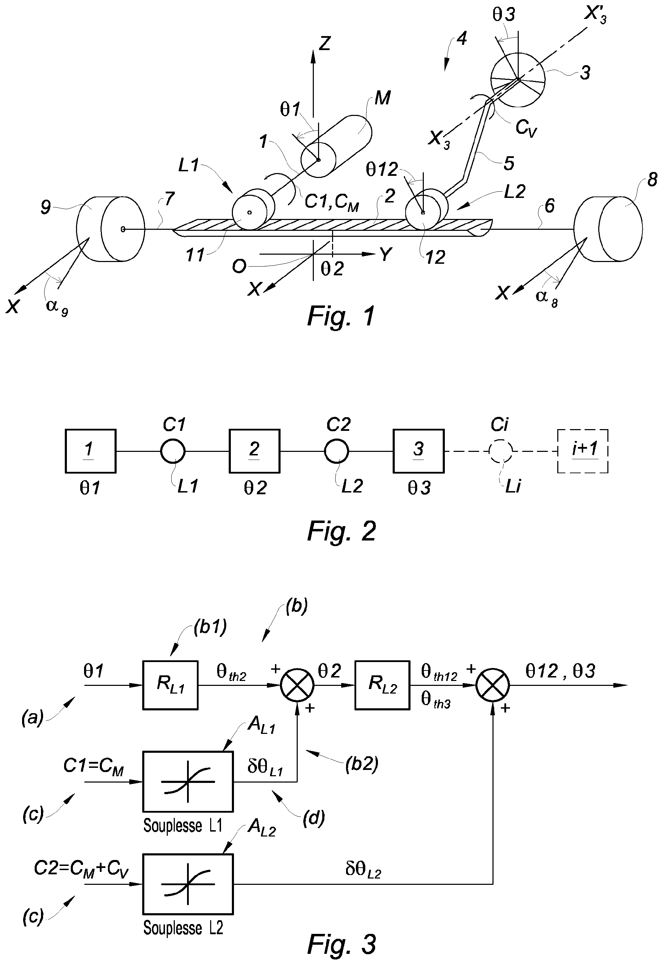

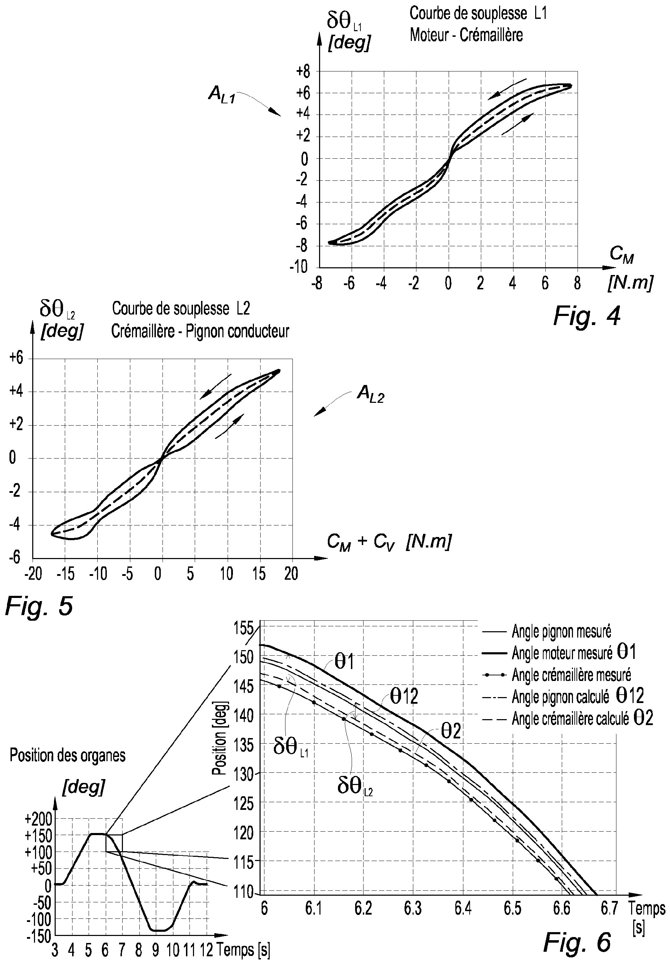

La figure 6 illustre, selon une vue générale avec agrandissement partiel, les positions respectives de différents organes du mécanisme de direction de la figure 1, en l'espèce les positions de l'arbre du moteur d'assistance, de la crémaillère et du second pignon situé côté conducteur, au cours d'un cycle de braquage, de manière à faire apparaître comparativement (en utilisant une mise à l'échelle normalisée par rapport à l'angle du volant) d'une part les positions calculées de la crémaillère et du second pignon, évaluées selon le procédé conformé à l'invention à partir d'une mesure de la position angulaire de l'arbre du moteur d'assistance, et d'autre part les positions effectives de ces mêmes organes de direction, mesurées sur un banc d'essai dans les mêmes conditions de sollicitation, la proximité des courbes calculées et des courbes mesurées permettant d'apprécier la grande précision et l'excellente fiabilité du procédé de calcul conforme à l'invention.

L'invention concerne un procédé de détermination de la position, et plus particulièrement de la position absolue, d'un organe mobile de direction 1, 2, 3 appartenant à un mécanisme de direction 4 de véhicule qui comprend au moins un premier organe 1 mobile, tel qu'un arbre 1 de moteur d'assistance de direction $\underline{M}$, ainsi qu'un second organe 2 mobile, distinct du premier 1, tel qu'une crémaillère 2, qui coopèrent l'un avec l'autre par l'intermédiaire d'au moins une première liaison L1 permettant une transmission d'effort C1 et de mouvement entre le premier organe 1 et le second organe 2.

Le mécanisme de direction 4 comprendra de préférence un volant de conduite 3, par lequel le conducteur peut agir, et plus particulièrement exercer manuellement un couple volant $C_V$, sur une colonne de direction 5 qui vient en prise sur la crémaillère 2, afin de déplacer ladite crémaillère 2 en translation (selon une direction notée $\underline{Y}$ sur la figure 1, qui correspond de préférence sensiblement à l'axe longitudinal de ladite crémaillère, et préférentiellement à la direction transverse du véhicule) dans un carter de direction solidaire du châssis du véhicule.

Par commodité de description, on associera au mécanisme de direction 4, et plus globalement au véhicule, un repère formé par un trièdre direct dont la direction horizontale longitudinale (arrière-avant du véhicule) est notée $\underline{X}$, la direction horizontale transverse (latérale droite-gauche) est notée $\underline{Y}$, et la direction verticale est notée $\underline{Z}$.

Le déplacement, c'est-à-dire le changement de position de la crémaillère 2 (selon la direction $\underline{Y}$) provoque, par l'intermédiaire de biellettes de direction 6, 7, une modification de l'orientation en lacet (angle de braquage $\alpha_8$, $\alpha_9$, autour de l'axe $\underline{Z}$) des roues directrices gauche 8 et droite 9.

De préférence, tel que cela est illustré sur la figure 1, le mécanisme de direction 4 forme un mécanisme de direction assistée comprenant au moins un moteur d'assistance $\underline{M}$, de préférence électrique, et préférentiellement à deux sens de fonctionnement, qui permet de fournir, selon des lois d'assistance prédéterminées, un couple d'assistance à la manoeuvre de la direction, ledit couple d'assistance étant dit « couple moteur » $C_M$.

A titre d'exemple, ce couple moteur $C_M$ pourra amplifier le couple volant $C_V$ afin de faciliter le braquage des roues ou bien encore aider au rappel du volant 3 en position centrale en sortie de virage.

Selon une variante de réalisation préférentielle, le mécanisme de direction 4 pourra former un mécanisme à double pignon, tel qu'illustré sur figure 1.

Un tel mécanisme à double pignon comprend tout d'abord, sur une portion de chaîne cinématique formant un « tronçon d'assistance », un moteur d'assistance $\underline{M}$ dont l'arbre 1 forme le premier organe mobile et vient en prise, par une première liaison L1 comportant un premier pignon 11, sur une crémaillère de direction 2 qui est montée coulissante dans un carter de direction et qui forme le second organe mobile.

Ledit mécanisme à double pignon comprend également, sur une portion de chaîne cinématique (distante et séparée de la précédente) formant un « tronçon manuel », un volant de conduite 3, qui forme un troisième organe mobile et qui vient en prise sur la crémaillère 2 par une seconde liaison L2 comprenant un second pignon 12 (lequel est en l'espèce fixé à l'extrémité de la colonne de direction opposée à l'extrémité recevant le volant 3).

Ceci étant, le procédé conforme à l'invention est tout-à-fait applicable à d'autres variantes d'agencement de direction, dès lors que l'on souhaite connaître (calculer) la position d'un organe mobile à partir de la connaissance de la position d'un autre organe appartenant à la même chaîne cinématique.

Ainsi, le mécanisme de direction 4 pourrait former, de manière alternative, un mécanisme à simple pignon comprenant un moteur d'assistance $\underline{M}$ qui viendrait directement en prise sur la colonne de direction 5, par exemple par l'intermédiaire d'un réducteur à roue tangente et vis sans fin, entre le volant 3 et le pignon 12 (cette fois unique) qui permet à ladite colonne 5 d'engrener sur la crémaillère 2.

Par simple commodité de description, il sera fait référence dans ce qui suit, à titre préférentiel mais non limitatif, aux organes de direction décrits dans ce qui précède, et, plus particulièrement, à l'agencement à double pignon.

En tout état de cause, tel que cela est illustré sur la figure 2, la succession des organes de direction mobiles 1, 2, 3, i+1 et de la ou des liaisons L1, L2, Li... (i représentant un nombre entier) permettant auxdits organes 1, 2, 3 d'interagir entre eux en s'articulant (en série) l'un par rapport à l'autre et de se déplacer selon des trajectoires distinctes définies par la nature cinématique desdites liaisons L1, L2, Li, formera une chaîne cinématique du mécanisme de direction 4, permettant *in fine* la modification de l'angle de braquage $\alpha_8$, $\alpha_9$ des éléments directeurs (roues directrices 8, 9) du véhicule.

La ou les liaisons L1, L2, Li concernées seront bien entendu agencée(s) pour permettre une transmission de puissance mécanique depuis l'organe d'entrée (par exemple le premier organe 1 pour la liaison L1) vers leur organe de sortie (par exemple le second organe 2 pour la liaison L1) qui sera suffisante pour permettre à l'organe d'entrée d'entraîner l'organe de sortie en déplacement afin de modifier l'angle de braquage des roues directrices 8, 9 et/ou pour maintenir ledit angle de braquage, à l'encontre notamment des contraintes exercée par la chaussée sur lesdites roues.

Bien entendu, la ou les liaisons L1, L2, Li pourront prendre toute forme appropriée pour l'accouplement de deux organes 1, 2, 3 successifs, en vue de la transmission d'effort C1, C2, Ci et de la conversion de mouvement désirées.

La ou les liaisons L1, L2, Li seront avantageusement bidirectionnelles, c'est-à-dire autoriseront aussi bien un mouvement de braquage vers la gauche que vers la droite.

De façon particulièrement préférentielle, ladite ou lesdites liaisons L1, L2, Li seront réversibles, c'est-à-dire que l'organe d'entrée pourra entraîner en déplacement l'organe de sortie et, réciproquement, l'organe de sortie pourra entraîner en déplacement l'organe d'entrée. A ce titre, lesdites liaisons pourront par exemple former des engrenages, des embiellages ou encore des liaisons par vis à billes réversibles.

Selon une variante de réalisation préférentielle, le second organe est formé par une crémaillère de direction 2, montée coulissante dans un carter de direction, et sur laquelle le premier organe 1 engrène par un pignon 11.

On notera que le choix de déterminer par calcul, selon le procédé conforme à l'invention, la position de la crémaillère 2, permet d'obtenir une évaluation particulièrement précise et fiable de l'angle de lacet (angle de braquage) des roues directrices 8, 9, dans la mesure où ladite crémaillère 2 est particulièrement proche desdites roues 8, 9 dans la chaîne cinématique de direction (puisqu'elle n'en est séparée que par les biellettes 6, 7 commandant la rotation en lacet des porte-fusées).

L'efficacité des systèmes de sécurité, et notamment de contrôle de trajectoire (ESP), qui exploitent cette information d'angle de braquage $\alpha_8$, $\alpha_9$ s'en verra ainsi accrue.

Selon l'invention, le procédé comprend une étape (a) d'acquisition d'une position de référence, au cours de laquelle on mesure la position instantanée $\theta 1$ du premier organe 1 par rapport à une origine prédéterminée.

Plus préférentiellement, le premier organe 1 étant formé par l'arbre 1 d'un moteur d'assistance $\underline{M}$ de direction, on mesurera, au cours de l'étape (a) d'acquisition d'une position de référence, la position angulaire instantanée $\theta 1$ dudit arbre 1 du moteur d'assistance, de préférence au moyen d'un capteur de position intégré audit moteur $\underline{M}$.

Avantageusement, l'utilisation d'un capteur de position angulaire qui est déjà présent au sein du moteur d'assistance, tel que cela est généralement le cas sur tous les moteurs électriques synchrones, permet de faire l'économie d'un capteur supplémentaire dédié, et d'exploiter directement, aux fins du calcul selon le procédé conforme à l'invention, une information de position $\theta 1$ qui est déjà directement disponible au niveau du moteur $\underline{M}$, et plus globalement sur le réseau de bord (Controller Area Network) du véhicule.

La mise en oeuvre du procédé ne provoque donc avantageusement aucun accroissement de volume ou de poids du système de direction.

On notera que, par commodité de description (et par simplification d'exploitation du procédé), toutes les valeurs $\theta 1$, $\theta 2$, $\theta 3$, $\theta 12$ (...) représentatives d'une position d'organe de direction 1, 2, 3, 12 (...), et notamment de la position angulaire $\theta 1$ de l'arbre moteur, de la position longitudinale $\theta 2$ de la crémaillère, de la position angulaire $\theta 12$ du second pignon 12 ou de la position angulaire $\theta 3$ du volant 3, seront de préférence exprimées sous forme de « positions angulaires équivalentes », dans un repère commun (unique), ledit repère étant de préférence attaché, par convention, à l'axe de rotation matériel $(X_3 X_3')$ du volant de conduite 3.

Le cas échéant, la conversion entre la position absolue réelle d'un organe de direction 1, 2, 12, exprimée par exemple dans le repère X, Y, Z attaché au véhicule, et la position angulaire équivalente d'un même organe de direction 1, 2, 12 dans le repère attaché à l'axe du volant 3, pourra être effectuée en multipliant ladite position absolue (matérielle) de l'organe concerné par l'inverse des rapports de transmission (et notamment les rapports de réduction ou d'amplification) qui caractérisent géométriquement la liaison, ou la succession de liaisons L1, L2, Li, qui séparent l'organe 1, 2, 12 considéré du volant 3.

Le « rapport (ratio) de transmission $R_{L1}$, $R_{L2}$ » (ou « rapport de conversion ») est lié à la géométrie de la liaison considérée L1, L2, et définit les caractéristiques cinématiques du mouvement de l'organe de sortie (ici le second organe 2 pour la liaison L1), et notamment l'amplitude (position) ou la vitesse dudit mouvement, en fonction des caractéristiques (amplitude, vitesse) du mouvement de l'organe d'entrée (le premier organe 1 pour cette même liaison L1).

Ce rapport de transmission $R_{L1}$, $R_{L2}$ peut typiquement correspondre au rapport d'engrenage (en réduction ou en amplification) dans le cas d'une liaison par engrenage, au pas d'incrément axial par unité d'angle de vis dans une liaison à vis à billes, ou bien encore au levier correspondant au rayon primitif du pignon 12 dans le cas d'une liaison pignon 12/crémaillère 2, etc.

Ainsi, par exemple, la position linéaire (absolue) de la crémaillère, c'est-à-dire le déplacement linéaire (généralement exprimé en millimètres) de ladite crémaillère par rapport à la position centrale $\underline{O}$ de la direction, pourra être convertie en position angulaire équivalente $\theta 2$ en multipliant ledit déplacement linéaire par l'inverse du rapport d'engrenage (rapport de conversion de mouvement) de la seconde liaison L2, c'est-à-dire, typiquement, par l'inverse du rayon primitif du pignon 12.

De façon particulièrement préférentielle, les positions angulaires équivalentes des organes mobiles pourront en outre être « normalisées », c'est-à-dire rapportées à l'échelle de la course de l'organe (ici de préférence le volant 3) qui est choisi pour définir le repère commun.

En d'autres termes, le déplacement respectif de chaque organe de direction pourra être exprimé sous forme de l'amplitude équivalente de rotation du volant 3, amplitude de rotation du volant qui est nécessaire pour commander le déplacement considéré dudit organe.

En pratique, la normalisation des positions des organes de direction, et plus particulièrement la normalisation des positions angulaires équivalentes de ces derniers, pourra être réalisée en effectuant le quotient de la position instantanée de l'organe 1, 2, 12 considéré (mesurée ou calculée) par la course totale dudit organe considéré, puis en multipliant ce quotient par la course angulaire totale correspondante du volant 3.

A titre d'exemple, si l'on considère que, pour faire passer la crémaillère 2 de sa position centrale (les roues directrices 8, 9 étant alignées dans l'axe longitudinal du véhicule) à sa position de braquage maximal à gauche (les roues 8, 9 étant orientées au maximum possible vers la gauche du véhicule), il est nécessaire de déplacer ladite crémaillère en translation d'une course totale de $y_{2MAX}$ mm, en tournant à cet effet le volant 3 à gauche d'un angle (course angulaire totale) de $\theta 3_{MAX}$ degrés, alors la position angulaire normalisée $\theta 2$ de la crémaillère 2, correspondant à un déplacement quelconque de $y_2$ mm de ladite crémaillère vers la gauche, sera donnée par : $\theta 2 = y_2/y_{2MAX} * \theta 3_{MAX}$.

On remarquera qu'un tel mode d'expression « normalisé » revient finalement à considérer (fictivement, pour simplifier la représentation et la gestion du mécanisme de direction 4) que, si les liaisons L1, L2, Li étaient parfaites, et notamment infiniment rigides (et sans jeu), leurs rapports de transmission $R_{L1}$, $R_{L2}$, $R_{Li}$ respectifs seraient en fait unitaires ($R_{Li} = 1$), de telle sorte que, en particulier, la position angulaire équivalente normalisée $\theta 2$ du second organe 2 (ou de tout autre organe de la chaîne cinématique considérée) serait égale à la position angulaire équivalente normalisée $\theta 1$ du premier organe 1.

Par ailleurs, dans tous les cas, c'est-à-dire quel que soit le mode d'expression (position absolue réelle, position angulaire équivalente, ou position angulaire équivalente normalisée) retenu pour exprimer les positions des organes, l'origine du repère, par rapport à laquelle sont quantifiées lesdites positions des organes mobiles, correspondra de préférence à la position centrale O (position neutre) de la direction (et plus particulièrement à la position centrale du volant 3), lorsque les roues 8, 9 sont droites, c'est-à-dire sont orientées selon des angles de braquage nuls : $\alpha_8 = \alpha_9 = 0$.

Selon l'invention, le procédé comprend, suite à l'étape (a) d'acquisition d'une position de référence, une étape (b) de conversion au cours de laquelle on calcule la position instantanée $\theta 2$ du second organe 2 à partir de la position instantanée $\theta 1$ du premier organe (et, le cas échéant, à partir du rapport de transmission $R_{L1}$ de la première liaison L1).

Selon l'invention, le procédé comprend également une étape (c) de mesure de contrainte, au cours de laquelle on recueille une valeur de contrainte C1 représentative de l'effort instantané C1 transmis entre le premier organe 1 et le second organe 2 à travers la première liaison L1, puis une étape (d) de correction au cours de laquelle on adapte l'étape (b) de conversion en fonction de ladite valeur de contrainte C1, afin de prendre en considération, dans le calcul de la position $\theta 2$ du second organe 2, un décalage de position $\delta\theta_{L1}$ du second organe 2 par rapport au premier organe 1 qui résulte de la déformation élastique de la première liaison L1 sous l'effet de l'effort C1 transmis par cette dernière.

Par commodité, de même qu'on exprime les positions des organes de direction sous forme de positions angulaires dans un même repère de référence attaché à l'axe $(X_3X_3')$ du volant 3, on exprimera les efforts C1, C2, Ci..., transmis à travers respectivement les liaisons L1, L2, Li, sous forme de couples équivalents d'entraînement autour dudit axe de référence $(X_3X_3')$.

En outre, par souci de concision et par commodité de notation, on assimilera la valeur de contrainte représentative de l'effort à l'effort C1, C2, Ci lui-même.

La ou les valeurs de contrainte C1, C2, Ci nécessaires au calcul pourront être obtenues par tout moyen approprié, et notamment par un ou des capteurs de couple placé(s) sur l'arbre 1 du moteur d'assistance $\underline{M}$, sur la colonne de direction 5 à proximité du volant 3, etc., ou bien par toute évaluation (calcul) pertinente réalisée à partir de données disponibles sur le réseau de bord.

Avantageusement, le procédé conforme à l'invention permet de déterminer en temps réel, par un calcul relativement simple, la position de tout (second) organe 2 de la chaîne cinématique de direction avec une grande précision, en prenant en considération simplement d'une part la position d'un (premier) organe 1 de référence, et d'autre part les conséquences de l'élasticité intrinsèque réelle du tronçon intercalaire de chaîne cinématique qui sépare le premier organe 1 du second organe 2, élasticité qui est liée à la nature du matériau constitutif des différents éléments dudit tronçon intermédiaire, à leur forme et à leurs dimensions, et qui contribue, du fait de la déformation dudit tronçon sous la contrainte, à créer un effet de déviation supplémentaire (décalage) par rapport à la position théorique de l'organe considéré que l'on aurait observé si les liaison avaient été idéales.

Bien entendu, le principe de calcul proposé par l'invention pourra être réitéré et étendu, de proche en proche, liaison après liaison, sur toute longueur de la chaîne cinématique concernée, quel que soit le nombre des organes et de liaisons constitutifs de ladite chaîne, de telle manière que l'on pourra déterminer par calcul avec une très grande précision la position de tout organe 2, 3, i+1 de la chaîne, même très distant de l'organe 1 (le cas échéant du seul organe) dont on connaît exactement la position de référence par une mesure.

En outre, on pourra avantageusement, dans l'absolu, choisir indifféremment comme référence, c'est-à-dire comme point de départ du calcul, tout organe de la chaîne cinématique dont on peut mesurer facilement la position, dès lors que l'on disposera des caractéristiques (cinématiques et élastiques) des différentes liaisons successivement franchies et d'une connaissance des états de contrainte correspondants permettant d'effectuer un recalage (correction) de position de proche en proche à partir de cet organe de référence et jusqu'à l'organe-cible dont on souhaite finalement calculer la position.

Ainsi, on pourrait par exemple envisager que la position de référence soit connue par une mesure de la position angulaire du volant 3, ou même de la position linéaire longitudinale de la crémaillère 2.

De façon particulièrement avantageuse, au cours de l'étape (d) de correction, on associe à la valeur de contrainte C1, selon un abaque d'élasticité $A_{L1}$ prédéterminé (figure 4), que l'on pourra également désigner comme « courbe de souplesse », et qui est représentatif du comportement élastique de la première liaison L1, une composante de correction $\delta\theta_{L1}$ représentative d'un décalage de position $\delta\theta_{L1}$ correspondant à la déformation élastique de ladite première liaison L1 sous ladite valeur de contrainte C1.

Ici encore, par commodité de notation, on assimilera la composante de correction $\delta\theta_{L1}$ au décalage de position qu'elle représente.

Le mode d'expression du décalage de position $\delta\theta_{L1}$, et donc de la composante de correction $\delta\theta_{L1}$ correspondante, sera de préférence homogène au mode d'expression retenu pour exprimer la position calculée de l'organe visé, à laquelle s'applique cette correction, ledit décalage pouvant ainsi être exprimé selon le cas soit sous forme « réelle » (dans le repère attaché au véhicule), soit, de préférence, sous la forme d'un décalage angulaire équivalent (dans le repère attaché à l'axe du volant 3), soit, de façon particulièrement préférentielle, sous la forme d'un décalage angulaire normalisé (rapporté à l'échelle de la course du volant 3).

On notera par ailleurs que le principe de calcul du décalage de position est bien entendu applicable *mutatis mutandis* lors du franchissement de chacune des autres liaisons dans la chaîne cinématique étudiée.

Ainsi, tel que cela apparaît notamment sur la figure 3, on pourra associer au franchissement d'une seconde liaison L2 entre le second organe 2 et un troisième organe de direction (par exemple le second pignon 12 ou le volant 3), ladite seconde liaison L2 étant soumise à un effort de transmission C2, une composante de correction $\theta\delta_{L2}$ représentative d'un décalage de position $\delta\theta_{L2}$ (entre le troisième organe 3, 12 et le second organe 2) qui correspond à la déformation élastique de ladite seconde liaison L2 sous la valeur de contrainte C2, et ce grâce à un (second) abaque d'élasticité $A_{L2}$ prédéterminé (figure 5), représentatif du comportement élastique de la seconde liaison L2.

Il est remarquable que le principe général de l'invention consistant à caractériser, ici au moyen d'un abaque d'élasticité, l'élasticité d'un tronçon (quel qu'il soit) d'une chaîne cinématique d'une direction, ledit tronçon s'étendant entre un premier point de ladite chaîne et un second point de ladite chaîne distant du premier (et de préférence appartenant à un organe de direction formant un solide distinct de celui auquel appartient le premier point), de manière à pouvoir calculer la position effective, et plus particulièrement la position angulaire, dudit second point à partir de la connaissance d'une part de la position (mesurée) du premier point, d'autre part (s'il y a lieu) de la caractéristique de la liaison cinématique (idéale) entre le premier et le second point, et enfin de l'état de contrainte, et plus particulièrement du couple de torsion, que subit ledit tronçon, est applicable quelles que soient la longueur et la nature du tronçon concerné, et notamment quel que soit le nombre d'organes distincts et de liaison(s) constituant ledit tronçon, dès lors que l'on dispose d'un abaque caractérisant ledit tronçon pour évaluer la correction associée, liée au décalage de position sous contrainte (par rapport à la position théorique liée à une cinématique fictivement idéale).

A ce titre, on notera qu'il est possible de fractionner arbitrairement la chaîne cinématique du mécanisme de direction 4 en autant de tronçons que désiré, et de caractériser chaque tronçon de cette pluralité de tronçons par son propre abaque d'élasticité.

La « longueur » de chaque tronçon, et plus particulièrement le nombre d'organe(s) et de liaison(s) regroupés au sein du même tronçon, pourront notamment être choisis selon divers critères, tels que la sélection du ou des organes "stratégiques" dont il importe de pouvoir calculer la position, la sensibilité desdits organes ou liaisons à la déformation élastique sous l'effort de transmission, et/ou selon la résolution (plus ou moins fine) dont on souhaite disposer pour caractériser le comportement de la chaîne cinématique.

Ainsi, à titre d'exemple, si l'on subdivise la chaîne en une succession de tronçons courts (selon un « maillage fin »), chaque tronçon contenant uniquement une liaison L1 (et les deux organes mobiles 1, 2 immédiatement juxtaposés qui viennent en prise l'un avec l'autre pour former ladite liaison), alors on pourra déterminer, de proche en proche, les positions respectives des organes de chaque tronçon, avec une grande précision en tout point de la chaîne, ce qui permettra de disposer d'informations très complètes sur l'état de la chaîne de direction.

A l'inverse, un regroupement de plusieurs liaisons au sein d'un même tronçon (maillage plus grossier) permettra de déterminer uniquement les positions de certains organes (parmi la totalité des organes constitutifs de la chaîne) qui auront été préalablement sélectionnés pour leur caractère stratégique, mais en utilisant avantageusement moins de capteurs (d'effort), moins de ressources de stockage (pour les abaques) et moins de puissance de calcul.

Quelle que soit la finesse du maillage utilisé, on affectera au tronçon concerné un abaque d'élasticité $A_{L1}$, $A_{L2}$, $A_{Li}$ associant un décalage de position $\delta\theta_{L1}$, $\delta\theta_{L2}$, $\delta\theta_{Li}$ (par déformation élastique) à un état de contrainte C1, C2, Ci dudit tronçon, et plus particulièrement exprimant une déformation angulaire (équivalente) sous un effort de torsion (équivalent).

A ce titre, on notera que, avantageusement, l'extension de la « longueur » d'un tronçon (c'est-à-dire l'accroissement du nombre et/ou des dimensions des organes et des liaisons qui le constituent) ne dégrade pas, en pratique, la précision du calcul de la position d'un organe terminal dudit tronçon (organe de sortie) à partir de la position de l'organe terminal opposé de ce même tronçon (organe d'entrée), dès lors que l'on établit un abaque qui caractérise effectivement le comportement dudit tronçon dans son entier, depuis l'organe d'entrée jusqu'à l'organe de sortie.

Le ou les abaques nécessaires pourront être construits ou modélisés au préalable par tout moyen approprié, et par exemple de manière empirique par une campagne d'essais réalisés sur le mécanisme de direction 4 réel, ou bien par une simulation numérique (du genre calcul par éléments finis).

Lesdits abaques, ou « cartographies » (« map »), pourront par exemple être stockés sous forme de courbes (nuages de points) dans une mémoire non volatile du calculateur de direction.

Afin de limiter l'espace de stockage nécessaire, lesdites courbes, généralement non linéaires, pourront notamment être simplifiées et reposer sur la connaissance d'un nombre limité de points (par exemple dix points), le cas échéant interpolés, par exemple linéairement par morceaux ou par une fonction polynomiale appropriée.

Par ailleurs, les inventeurs ont constaté empiriquement que le comportement élastique de la ou des liaisons L1, L2 étudiées, objet des abaques, présentait généralement un phénomène d'hystérésis, tel que cela est visible sur les figures 4 et 5.

En l'espèce, le sens de parcours des cycles d'hystérésis est antihoraire, tel que cela est indiqué par les flèches sur lesdites figures.

En première approximation, il est toutefois possible de considérer, pour le calcul des décalages de position, le comportement élastique moyen qui correspond à la courbe moyenne de demi-hystérésis, passant par les milieux des cycles, ladite courbe moyenne étant représentée par un tracé en tirets sur les figures 4 et 5.

En pratique, des essais démontrent, tel que cela apparaît sur la figure 6, que la précision atteinte, c'est-à-dire l'erreur maximale constatée entre les valeurs de position calculées et les valeurs de position véritables, telles que vérifiées par mesure sur banc d'essai (valeurs dites « mesurées » sur ladite figure 6), ici pour les positions θ2 de la crémaillère et θ12 du second pignon (côté conducteur), est alors inférieure ou égale à 1 (un) degré, même pour des amplitudes de braquage importantes, correspondant ici à une variation d'angle θ1 d'arbre moteur 1 équivalente à +/- 150 degrés d'amplitude de rotation du volant 3.

A titre indicatif, les efforts mis en oeuvre au cours de ces essais, et qui correspondent aux situations de vie usuelles d'une direction de véhicule automobile, étaient de l'ordre de 3 N.m pour le couple volant $C_V$, de 4 N.m à 8 N.m pour le couple moteur $C_M$ délivré par le moteur d'assistance, ce qui se traduit par des efforts de traction sur la crémaillère 2 pouvant atteindre environ 14 kN.

Ceci étant, selon une variante possible de mise en oeuvre qui peut constituer une invention à part entière, il est parfaitement envisageable, pour tenir compte du phénomène d'hystérésis associé à la déformation élastique d'un ou plusieurs tronçons de chaîne cinématique de direction, et plus particulièrement d'une ou plusieurs liaisons L1, L2, de prendre en considération, lors de l'étape (d) de correction, des lois de comportement (notamment de la première liaison L1) en déformation élastique sous contrainte qui seront différentes selon que la valeur de contrainte C1, C2 augmente (c'est-à-dire croît en valeur absolue) dans le temps ou au contraire diminue dans le temps.

En l'espèce, l'hystérésis a ici pour conséquence que l'ampleur du décalage de position est (ou reste) plus importante, à valeur de contrainte initialement égale, en phase de "descente" de ladite contrainte C1, C2 (c'est-à-dire lorsque l'ampleur de la contrainte est en cours de diminution et se dirige vers zéro), qu'en phase de "montée" de ladite contrainte C1, C2 (c'est-à-dire lorsque l'ampleur de ladite contrainte est en cours d'augmentation et s'éloigne de zéro).

Une telle distinction entre phase ascendante (phase d'augmentation de contrainte) et phase descendante (phase de diminution de contrainte) permettra avantageusement d'obtenir une précision accrue de l'estimation du décalage de position lié à la déformation élastique, et par conséquent du calcul de la position du ou des organes 2, 3, 12 concernés.

La sélection du modèle ascendant ou descendant pourra être effectuée à partir de la connaissance du sens de progression de la valeur de contrainte C1, C2, sens de progression qui pourra être lui-même déterminé par un calcul de dérivée première temporelle, c'est-à-dire par le signe de la variation (différence) entre deux valeurs de contrainte C1(t1), C1(t2) successivement mesurées dans le temps (à deux instants distincts t1 puis t2).

Le cas échéant, on pourra prévoir un filtre passe-bas en amont du calcul de dérivée, afin d'empêcher le bruit de fausser l'évaluation du sens de progression de la valeur de contrainte C1, C2.

De préférence, tel que cela est illustré sur la figure 3, l'étape (b) de conversion comprend une sous-étape (b1) de conversion théorique, au cours de laquelle on calcule une composante théorique de position θth2 du second organe 2 en multipliant la position θ1 du premier organe 1 par le rapport de transmission $R_{L1}$ théorique de la première liaison L1, considérée fictivement comme indéformable, puis une sous-étape (b2) de recalage au cours de laquelle on ajoute à la composante théorique de position θth2 du second organe la composante de correction issue de l'étape (d) de correction $\delta\theta_{L1}$ afin d'obtenir la position effective θ2 du second organe 2.

En d'autres termes, tel que cela est notamment visible sur les figures 3 et 6, on considère de préférence, pour effectuer le calcul, que la position effective θ2 d'un organe de sortie 2 (de préférence exprimée en position angulaire absolue équivalente, le cas échéant normalisée) est la somme (algébrique, en tenant compte des signes) d'une première composante correspondant à la position théorique θth2 dans laquelle se trouverait ledit organe de sortie 2 si sa liaison L1 avec l'organe d'entrée 1 était idéale et infiniment rigide, et d'une seconde composante $\delta\theta_{L1}$ correspondant au décalage de position induit par la déformation élastique sous contrainte C1 de la liaison L1.

Bien entendu, si la position absolue effective θ2 de l'organe de sortie 2 est normalisée, c'est-à-dire exprimée en position angulaire équivalente dans un repère commun, attaché à un autre organe mobile, tel que le volant 3, on peut s'affranchir du rapport de transmission $R_{L1}$ lors du calcul de la position théorique (ce qui revient à considérer un rapport de transmission unitaire), de telle sorte que ladite position théorique de l'organe de sortie 2 est (en principe) égale à la position mesurée de l'organe d'entrée 1 : θth2 = θ1.

En définitive, selon cette approche simplifiée, le procédé permet donc d'estimer (calculer), en temps réel, la position effective du second organe 2, en appliquant (ajoutant algébriquement) simplement à la position mesurée θ1 du premier organe 1 la composante de correction $\delta\theta_{L1}$ (également normalisée, c'est-à-dire exprimée en tant que déviation angulaire équivalente dans le repère commun) qui est associée à la déformation élastique de la liaison L1 sous la valeur de contrainte C1.

Bien entendu, en réitérant plus globalement à chaque liaison i (respectivement à chaque tronçon de la chaîne cinématique), la mesure de la valeur de contrainte Ci et la détermination (de préférence d'après l'abaque d'élasticité $A_{Li}$) du décalage de position correspondant $\delta\theta_{Li}$ induit par déformation élastique, on peut déterminer avec précision, et à chaque instant, la position de l'organe distant i+1, en ajoutant à la position mesurée θ1 du premier organe servant de référence la somme algébrique des décalages :

$$\theta_{i+1} = \theta 1 + \sum_{j=1}^{i} \delta\theta_{Lj}$$

On notera à ce titre que, par simple commodité de description, la figure 3 utilise uniquement des symboles « + » pour indiquer ces opérations de somme algébrique, quel que soit le signe intrinsèque (positif ou négatif) des positions angulaires et des décalages considérés.

Bien entendu, en pratique, selon notamment le signe des contraintes appliquées aux organes constitutifs des liaisons, et donc selon le sens des déformations résultant de ces contraintes, la « somme algébrique » pourra revenir soit à soustraire, soit au contraire à additionner, la valeur de la composante de correction à la valeur de la position angulaire.

A titre d'exemple, en utilisation classique du système de direction, le volant 3 (donc le second pignon 12) et le moteur d'assistance M (et donc l'arbre moteur 1) entraînent (activement) la crémaillère 2 et sont donc généralement "en avance" par rapport à ladite crémaillère.

En d'autres termes, la déformation élastique de la ou des liaisons correspondantes a pour conséquence, en pareil cas, que l'organe manoeuvré 2 reste en retrait de la position théorique que lui commande d'atteindre l'organe manoeuvrant 1, 12.

Ainsi, et tel que cela est illustré sur la figure 6, l'élasticité de la liaison L1 entre l'arbre moteur 1 et la crémaillère 2 ayant pour effet de "retarder" le déplacement (induit) de la crémaillère 2 par rapport au déplacement (moteur) de l'arbre 1, l'ampleur du déplacement de la crémaillère 2, et par conséquent sa position θ2, est inférieure, de la valeur (absolue) de la correction $\delta\theta_{L1}$, à l'ampleur du déplacement correspondant de l'arbre moteur 1.

Selon cet exemple, on pourra notamment observer que pour une position θ1 d'arbre moteur 1 voisine de +152 degrés (exprimés de façon normalisée dans le référentiel du volant 3), la crémaillère n'atteint "que" +146 degrés environ, la correction algébrique $\delta\theta_{L1}$ étant ainsi négative, de -6 degrés environ.

A l'inverse, si l'on considère le second pignon 12, qui est soumis à l'action conjointe de la crémaillère 2 et du volant 3, et qui bénéficie ainsi d'un couple volant $C_V$ qui tend à manoeuvrer la direction dans le même sens que le moteur d'assistance 1, alors l'élasticité de la liaison L2 entre la crémaillère 2 et ledit second pignon 12 permet audit second pignon 12 de "rattraper" une partie de son "retard" par rapport à la position théorique idéale, donnée par la position θ1 de l'arbre moteur.

En pratique, la correction $\delta\theta_{L2}$ à apporter à la position de la crémaillère θ2 pour obtenir la position θ12 du second pignon 12 sera donc ici comptée positivement.

De manière équivalente, cela revient à considérer que la crémaillère 2 est "en retard" par rapport au second pignon 12 qui la manoeuvre.

En l'espèce, dans l'exemple susmentionné, la position du second pignon 12 sera alors d'environ +150 degrés (comparés aux +146 degrés de la crémaillère).

En tout état de cause, et tel que cela a déjà été mentionné plus haut, on notera que le procédé conforme à l'invention permet d'obtenir une évaluation très précise et relativement exacte des positions instantanées des différents organes (la crémaillère 2 et le second pignon 12, dans cet exemple) à partir de la connaissance de la position effective d'un seul organe de référence (ici l'arbre moteur 1, dans cet exemple), comme en témoigne la proximité qui existe, sur la figure 6, entre la courbe de position « calculée » de l'organe considéré et la courbe de position effective « mesurée » (constatée par une vérification simultanée sur un banc d'essai).

En l'espèce, on notera que l'erreur absolue maximale entre la position calculée selon l'invention et la position réelle de chaque organe 2, 12, c'est-à-dire l'écart maximal entre courbe « calculée » et courbe « mesurée », reste inférieur(e) à 1,5 degré, voire à 1 (un) degré.

On retrouve ainsi, sur toute la chaîne cinématique du mécanisme de direction 4, un niveau de précision sensiblement égal à celui du capteur angulaire utilisé pour définir la position de l'organe de référence (ici l'arbre moteur 1).

On constate donc que, en prenant en considération les déformations élastiques dans les calculs de détermination des positions respectives des organes du mécanisme de direction 4, l'invention permet avantageusement de compenser efficacement les erreurs qui affectaient lesdits calculs jusqu'à présent.

Selon une variante de réalisation préférentielle, le premier organe 1 étant formé par l'arbre d'un moteur M d'assistance de direction, on recueille, au cours de l'étape (c) de mesure de contrainte, une valeur de contrainte C1 qui est représentative du couple d'assistance (ou couple moteur) $C_M$ délivré par le moteur.

De préférence, ladite valeur de contrainte C1 est recueillie soit par une mesure du couple exercé par l'arbre 1 du moteur M d'assistance, par exemple au moyen d'un capteur de couple du genre magnétostrictif, soit par une mesure de la consigne d'assistance appliquée audit moteur M.

En pratique, la mesure de la consigne d'assistance appliquée au moteur peut consister à lire (dans les données gérées par le calculateur contrôlant l'assistance de la direction) ou à mesurer l'intensité du courant électrique alimentant ledit moteur M à l'instant considéré, cette intensité étant en effet représentative du couple moteur $C_M$ délivré par ledit moteur.

Comme indiqué plus haut, cette valeur de contrainte C1, $C_M$ permettra de préférence d'évaluer la déviation de position angulaire $\delta\theta_{L1}$ correspondant à la déformation élastique de la première liaison L1.

On notera avantageusement que l'information concernant le couple moteur $C_M$ est généralement déjà disponible sur le réseau de bord contrôlant la direction, de telle sorte que son exploitation aux fins de l'invention ne nécessite aucun aménagement particulier de la direction.

Selon une forme de réalisation préférentielle, telle qu'évoquée plus haut et illustrée sur la figure 1, le mécanisme de direction 4 est un mécanisme à double pignon qui comprend un moteur d'assistance M dont l'arbre 1 forme le premier organe mobile et vient en prise, par une première liaison L1 comportant un premier pignon 11, sur une crémaillère de direction 2 qui est montée coulissante dans un carter de direction et qui forme le second organe mobile, ainsi qu'un volant de conduite 3, formant un troisième organe mobile qui vient en prise sur la crémaillère 2 par une seconde liaison L2 comprenant un second pignon 12.

Selon cette variante, lors de l'étape (a) d'acquisition d'une position de référence, on pourra mesurer la position angulaire instantanée θ1 de l'arbre 1 du moteur d'assistance, et, lors de l'étape (c) de mesure de contrainte, on pourra mesurer d'une part le couple d'assistance (couple moteur) $C_M$ fourni par le moteur d'assistance et d'autre part le couple volant $C_V$ exercé manuellement par le conducteur sur le volant de conduite 3, de manière à pouvoir déterminer la position angulaire θ3 du volant de conduite 3, et/ou respectivement la position angulaire θ12 du second pignon 12, en calculant successivement, tel que cela est illustré sur la figure 3, la position de la crémaillère θ2 à partir de la position angulaire θ1 de l'arbre 1 du moteur d'assistance, en tenant compte de la déformation $\delta\theta_{L1}$ de la première liaison L1 sous l'effet du couple moteur $C_M$, puis la position angulaire θ3 du volant de conduite, respectivement celle θ12 du second pignon, par rapport à la position de la crémaillère θ2, en tenant compte de la déformation $\delta\theta_{L2}$ de la seconde liaison L2 (tirée du second abaque $A_{L2}$) sous l'effet conjugué du couple d'assistance $C_M$ et du couple volant $C_V$ (c'est-à-dire en l'espèce sous l'effet de la valeur de contrainte C2 correspondant à la somme algébrique C2 = $C_M$ + $C_V$).

On trouve ici une bonne illustration de calcul de position de proche en proche, au cours de laquelle on calcule successivement les contributions au décalage respectives des différents maillons de la chaîne cinématique composée par les organes et liaisons intercalaires qui séparent l'organe de référence (premier organe 1) de l'organe cible dont on souhaite connaître la position (ici le troisième organe 3, 12).

Selon le procédé, on fait évoluer le (ou les) abaques $A_{L1}$, $A_{L2}$ selon l'état d'usure du mécanisme de direction 4, par exemple en fonction du kilométrage du véhicule.

Une telle mise à jour, effectuée par exemple lors des révisions périodiques du véhicule, permet notamment de tenir compte des effets de l'usure, parmi lesquels l'apparition progressive de jeux et la réduction des frottements dans les liaisons, qui modifient le comportement élastique, et plus particulièrement la raideur, de la liaison considérée (ou du tronçon de chaîne cinématique considéré), et par conséquent le tracé de l'abaque applicable.

L'invention concerne bien entendu en tant que tel un calculateur et/ou un support de données lisible par un calculateur, qui contient des éléments de code de programme informatique permettant la mise en oeuvre d'un procédé selon l'invention.

A ce titre, on notera que l'invention peut être mise en oeuvre en rattrapage sur des véhicules déjà en circulation, par simple reprogrammation (incluant le stockage des abaques) de leur calculateur de direction assistée.

L'invention concerne enfin en tant que tel un véhicule automobile, et plus particulièrement un véhicule automobile à roues motrices et à roues directrices destiné notamment au transport de personnes, qui comprend un mécanisme de direction assistée 4 qui est équipé d'un calculateur selon l'invention et/ou qui est régi par un procédé de détermination de position selon l'invention.

Bien entendu, l'invention n'est nullement limitée aux seules variantes de réalisation décrites, l'homme du métier étant notamment à même d'isoler ou de combiner librement entre elles l'une ou l'autre des caractéristiques mentionnées dans ce qui précède, ou bien de leur substituer des équivalents.

En particulier, il est parfaitement possible d'adapter le procédé au calcul de la position du pignon 12 et/ou de la crémaillère 2 à partir de la connaissance de la position du volant $\theta3$, ou de celle de l'arbre du moteur $\theta1$, au sein d'un mécanisme de direction comportant un seul pignon 12, et dont le moteur d'assistance $\underline{M}$ vient en prise sur la colonne de direction 5, entre le volant 3 et ledit pignon 12.

En pareil cas, l'abaque pourra notamment exprimer la déformation de la liaison L2 (unique) entre le moteur $\underline{M}$ et la crémaillère 2, via le pignon 12, en fonction du couple moteur $C_M$ ou d'une combinaison du couple moteur $C_M$ et du couple volant $C_V$.

**Revendications**

1. Procédé de détermination de la position d'un organe mobile de direction (1, 2, 3) appartenant à un mécanisme de direction (4) de véhicule qui comprend au moins un premier organe mobile (1), tel qu'un arbre (1) de moteur d'assistance (M) de direction, ainsi qu'un second organe mobile (2), distinct du premier (1), tel qu'une crémaillère (2), qui coopèrent l'un avec l'autre par l'intermédiaire d'au moins une première liaison (L1) permettant une transmission d'effort (C1) et de mouvement entre le premier organe (1) et le second organe (2), ledit procédé comprenant une étape (a) d'acquisition d'une position de référence, au cours de laquelle on mesure la position instantanée ($\theta1$) du premier organe (1) par rapport à une origine prédéterminée, puis une étape (b) de conversion au cours de laquelle on calcule la position instantanée ($\theta2$) du second organe (2) à partir de la position instantanée ($\theta1$) du premier organe (1), ledit procédé comprenant une étape (c) de mesure de contrainte, au cours de laquelle on recueille une valeur de contrainte (C1) représentative de l'effort instantané transmis entre le premier organe (1) et le second organe (2) à travers la première liaison (L1), puis une étape (d) de correction au cours de laquelle on adapte l'étape (b) de conversion en fonction de ladite valeur de contrainte (C1), afin de prendre en considération, dans le calcul de la position ($\theta2$) du second organe (2), un décalage de position ($\delta\theta_{L1}$) du second organe (2) par rapport au premier organe (1) qui résulte de la déformation élastique de la première liaison (L1) sous l'effet de l'effort transmis par cette dernière, le procédé étant **caractérisé en ce que**, au cours de l'étape (d) de correction, on associe à la valeur de contrainte (C1), selon un abaque d'élasticité ($A_{L1}$) prédéterminé, représentatif du comportement élastique de la première liaison (L1), une composante de correction ($\delta\theta_{L1}$) représentative d'un décalage de position ($\delta\theta_{L1}$) correspondant à la déformation élastique de ladite première liaison (L1) sous ladite valeur de contrainte (C1), et **en ce que** l'on fait évoluer l'abaque d'élasticité ($A_{L1}$) selon l'état d'usure du mécanisme de direction (4).

2. Procédé selon la revendication 1 caractérisé en ce l'on fait évoluer l'abaque d'élasticité ($A_{L1}$) en fonction du kilométrage du véhicule.

3. Procédé selon la revendication 1 ou 2 **caractérisé en ce que** l'étape (b) de conversion comprend une sous-étape (b1) de conversion théorique, au cours de laquelle on calcule une composante théorique de position ($\theta th2$) du second organe (2) en multipliant la position ($\theta1$) du premier organe (1) par le rapport de transmission ($R_{L1}$) théorique de la première liaison, considérée fictivement comme indéformable, puis une sous-étape (b2) de recalage au cours de laquelle on ajoute à la composante théorique de position du second organe ($\theta th2$) la composante de correction ($\delta\theta_{L1}$) issue de l'étape (d) de correction afin d'obtenir la position effective ($\theta2$) du second organe.

4. Procédé selon l'une des revendications précédentes **caractérisé en ce que**, lors de l'étape (d) de correction, on prend en considération des lois de comportement de la première liaison (L1) en déformation élastique sous contrainte qui sont différentes selon que la valeur de contrainte (C1) augmente dans le temps ou au contraire diminue dans le temps.

5. Procédé selon l'une des revendications précédentes **caractérisé en ce que** le premier organe (1) est formé par l'arbre d'un moteur (M) d'assistance de direction, et **en ce que**, au cours de l'étape (a) d'acquisition d'une position de référence, on mesure la position angulaire instantanée ($\theta1$) dudit arbre (1), de préférence au moyen d'un capteur de position intégré audit moteur (M).

6. Procédé selon l'une des revendications précédentes **caractérisé en ce que** le premier organe (1) est formé par l'arbre d'un moteur d'assistance de direction (M), et **en ce que**, au cours de l'étape (c) de mesure de contrainte, on recueille une valeur de contrainte (C1) qui est représentative du couple d'assistance ($C_M$) délivré par le moteur, de préférence soit par une mesure du couple exercé par l'arbre du moteur, soit par une mesure de la consigne d'assistance appliquée audit moteur.

7. Procédé selon l'une des revendications précédentes **caractérisé en ce que** le second organe (2) est formé par une crémaillère de direction, montée coulissante dans un carter de direction, et sur laquelle le premier organe (1) engrène par un pignon (11).

8. Procédé selon l'une des revendications précédentes **caractérisé en ce que** le mécanisme de direction (4) est un mécanisme à double pignon qui comprend un moteur d'assistance (M) dont l'arbre (1) forme le premier organe mobile et vient en prise, par une première liaison (L1) comportant un premier pignon (11), sur une crémaillère de direction (2) qui est montée coulissante dans un carter de direction et qui forme le second organe mobile, ainsi qu'un volant de conduite (3), formant un troisième organe mobile qui vient en prise sur la crémaillère (2) par une seconde liaison (L2) comprenant un second pignon (12), et **en ce que**, lors de l'étape (a) d'acquisition d'une position de référence, on mesure la position angulaire instantanée ($\theta1$) de l'arbre du moteur d'assistance, et, lors de l'étape (c) de mesure de contrainte, on mesure d'une part le couple d'assistance ($C_M$) fourni par le moteur d'assistance et d'autre part le couple volant ($C_V$) exercé manuellement par le conducteur sur le volant de conduite (3), de manière à pouvoir déterminer la position angulaire ($\theta3$) du volant de conduite, et/ou respectivement la position angulaire du second pignon ($\theta12$), en calculant successivement la position de la crémaillère ($\theta2$) à partir de la position angulaire ($\theta1$) de l'arbre du moteur d'assistance, en tenant compte de la déformation ($\delta\theta_{L1}$) de la première liaison (L1) sous l'effet du couple moteur ($C_M$), puis la position angulaire ($\theta3$) du volant de conduite (3), respectivement celle du second pignon (12), par rapport à la position de la crémaillère, en tenant compte de la déformation ($\delta\theta_{L2}$) de la seconde liaison (L2) sous l'effet conjugué du couple d'assistance ($C_M$) et du couple volant ($C_V$).

9. Calculateur, ou support de données lisible par un calculateur, contenant des éléments de code de programme informatique permettant la mise en oeuvre d'un procédé selon l'une quelconque des revendications précédentes.

10. Véhicule automobile comprenant un mécanisme de direction assistée qui est équipé d'un calculateur selon la revendication 9 et/ou qui est régi par un procédé de détermination de position selon l'une quelconque des revendications 1 à 8.

## Patentansprüche

1. Verfahren zur Bestimmung der Position eines mobilen Lenkorgans (1, 2, 3), das einem Lenkmechanismus (4) eines Fahrzeugs angehört, der zumindest ein erstes mobiles Organ (1), wie eine Welle (1) eines Unterstützungsmotors (M) einer Lenkung umfasst, sowie ein zweites mobiles Organ (2), das sich vom ersten (1) unterscheidet, wie eine Zahnstange (2), die miteinander durch zumindest eine erste Verbindung (L1) zusammenwirken, die eine Übertragung einer Kraft (C1) und einer Bewegung zwischen dem ersten Organ (1) und dem zweiten Organ (2) ermöglicht, wobei das besagte Verfahren einen Schritt (a) zur Erfassung einer Referenzposition umfasst, im Laufe dessen man die augenblickliche Position ($\theta1$) des ersten Organs (1) im Verhältnis zu einer vorbestimmten Grundposition misst, danach einen Schritt (b) zur Umrechnung, im Laufe dessen man die augenblickliche Position ($\theta2$) des zweiten Organs (2) ausgehend von der augenblicklichen Position ($\theta1$) des ersten Organs (1) berechnet, wobei das besagte Verfahren einen Schritt (c) zur Beanspruchungsmessung umfasst, im Laufe dessen man einen Beanspruchungswert (C1) erhält, der repräsentativ für die augenblickliche Kraft ist, die zwischen dem ersten Organ (1) und dem zweiten Organ (2) durch die erste Verbindung (L1) übertragen wird, danach einen Schritt (d) zur Korrektur, im Laufe dessen man den Schritt (b) zur Umrechnung je nach dem besagten Beanspruchungswert (C1) anpasst, um bei der Berechnung der Position ($\theta2$) des zweiten Organs (2) eine Positionsverschiebung ($\delta\theta_{L1}$) des zweiten Organs (2) im Verhältnis zum ersten Organ (1) zu berücksichtigen, die aus der elastischen Verformung der ersten Verbindung (L1) unter der Wirkung der Kraft hervorgeht, die durch letztere übertragen wird, wobei das Verfahren **dadurch gekennzeichnet ist, dass** man dem Beanspruchungswert (C1) im Laufe des Schritts (d) zur Korrektur entsprechend einem vorbestimmten Elastizitätsdiagramm ($A_{L1}$), das repräsentativ für das elastische Verhalten der ersten Verbindung (L1) ist, eine Korrekturkomponente ($\delta\theta_{L1}$) zuordnet, die repräsentativ für eine Positionsverschiebung ($\delta\theta_{L1}$) ist, die der elastischen Verformung der besagten ersten Verbindung (L1) unter dem besagten Beanspruchungswert (C1) entspricht, und dadurch, dass man das Elastizitätsdiagramm ($A_{L1}$) je nach Verschleißzustand des Lenkmechanismus (4) verändern lässt.

2. Verfahren nach Anspruch 1, **dadurch gekennzeichnet, dass** man das Elastizitätsdiagramm ($A_{L1}$) je nach Kilometerleistung des Fahrzeugs verändern lässt.

3. Verfahren nach Anspruch 1 oder 2, **dadurch gekennzeichnet, dass** der Schritt (b) zur Umrechnung einen Unterschritt (b1) zur theoretischen Umrechnung umfasst, im Laufe dessen man eine theoretische Positionskomponente ($\theta th2$) des zweiten Organs (2) berechnet, indem man die Position ($\theta 1$) des ersten Organs (1) mit dem theoretischen Übertragungsverhältnis ($R_{L1}$) der ersten Verbindung multipliziert, die fiktiv als nicht verformbar angenommen wird, danach einen Unterschritt (b2) zur Neueinstellung, im Laufe dessen man zur theoretischen Positionskomponente des zweiten Organs ($\theta th2$) die Korrekturkomponente ($\delta\theta_{L1}$) hinzufügt, die aus dem Schritt (d) zur Korrektur stammt, um die tatsächliche Position ($\theta 2$) des zweiten Organs zu erhalten.

4. Verfahren nach einem der vorhergehenden Ansprüche, **dadurch gekennzeichnet, dass** man beim Schritt (d) zur Korrektur die Verhaltensgesetze der ersten Verbindung (L1) bezüglich der elastischen Verformung unter Beanspruchung berücksichtigt, die je nachdem unterschiedlich sind, ob der Beanspruchungswert (C1) mit der Zeit zunimmt, oder im Gegenteil dazu mit der Zeit abnimmt.

5. Verfahren nach einem der vorhergehenden Ansprüche, **dadurch gekennzeichnet, dass** das erste Organ (1) durch die Welle eines Unterstützungsmotors (M) einer Lenkung gebildet wird, und dadurch, dass man im Laufe des Schrittes (a) zur Erfassung einer Referenzposition die augenblickliche Winkelposition ($\theta 1$) der besagten Welle (1) vorzugsweise anhand eines Positionssensors misst, der im besagten Motor (M) integriert ist.

6. Verfahren nach einem der vorhergehenden Ansprüche, **dadurch gekennzeichnet, dass** das erste Organ (1) durch die Welle eines Unterstützungsmotors (M) einer Lenkung gebildet wird, und dadurch, dass man im Laufe des Schrittes (c) zur Beanspruchungsmessung vorzugsweise entweder durch eine Messung des von der Motorwelle ausgeübten Moments, oder durch eine Messung des Unterstützungssollwerts, der auf den besagten Motor angewendet wird, einen Beanspruchungswert (C1) erhält, der repräsentativ für das Unterstützungsmoment ($C_M$) ist, das vom Motor geliefert wird.

7. Verfahren nach einem der vorhergehenden Ansprüche, **dadurch gekennzeichnet, dass** das zweite Organ (2) durch eine Zahnstange einer Lenkung gebildet wird, die gleitend in einem Lenkgehäuse montiert ist, und in die das erste Organ (1) durch ein Ritzel (11) eingreift.

8. Verfahren nach einem der vorhergehenden Ansprüche, **dadurch gekennzeichnet, dass** der Lenkmechanismus (4) ein Doppelritzel-Mechanismus ist, der einen Unterstützungsmotor (M) umfasst, dessen Welle (1) das erste mobile Organ bildet und durch eine erste Verbindung (L1), die ein erstes Ritzel umfasst (11), in Eingriff mit einer Lenkzahnstange (2) steht, die gleitend in einem Lenkgehäuse montiert ist, und die das zweite mobile Organ bildet, sowie ein Lenkrad (3), das ein drittes mobiles Organ bildet, das durch eine zweite Verbindung (L2), die ein zweites Ritzel umfasst (12), in Eingriff mit der Zahnstange (2) steht, und dadurch, dass man beim Schritt (a) zur Erfassung einer Referenzposition die augenblickliche Winkelposition ($\theta 1$) der Welle des Unterstützungsmotors misst, und man beim Schritt (c) zur Beanspruchungsmessung einerseits das Unterstützungsmoment ($C_M$) misst, das vom Unterstützungsmotor beigebracht wird, und andererseits das Lenkradmoment ($C_V$) das von Hand durch den Lenker am Lenkrad (3) angelegt wird, um die Winkelposition ($\theta 3$) des Lenkrads bestimmen zu können, und/ oder jeweils die Winkelposition des zweiten Ritzels ($\theta 12$), indem man nacheinander die Position der Zahnstange ($\theta 2$) aus der Winkelposition ($\theta 1$) der Welle des Unterstützungsmotors berechnet, indem man die Verformung ($\delta\theta_{L1}$) der ersten Verbindung (L1) unter der Wirkung des Motormoments ($C_M$) berücksichtigt, danach die Winkelposition ($\theta 3$) des Lenkrades (3), beziehungsweise jene des zweiten Ritzels (12), im Verhältnis zur Position der Zahnstange, indem man die Verformung ($\delta\theta_{L2}$) der zweiten Verbindung (L2) unter der gemeinsamen Wirkung des Unterstützungsmoments ($C_M$) und des Lenkradmoments ($C_V$) berücksichtigt.

9. Rechner, oder Datenträger, der von einem Rechner gelesen werden kann, Computerprogrammcodeelemente umfassend, die die Anwendung eines Verfahrens nach einem der vorhergehenden Ansprüche ermöglichen.

10. Kraftfahrzeug, einen unterstützen Lenkmechanismus umfassend, der mit einem Rechner nach Anspruch 9 ausgestattet ist, und/ oder der durch ein Verfahren zur Positionsbestimmung nach einem der Ansprüche 1 bis 8 geregelt wird.

**Claims**

1. A method for determining the position of a steering movable member (1, 2, 3) belonging to a vehicle steering mechanism (4) which comprises at least a first movable member (1), such as a steering assist motor (M) shaft (1), as well as a second movable member (2), distinct from the first movable member (1), such as a rack (2), which cooperate with one another by means of at least a first link (L1) allowing a transmission of force (C1) and of movement between the first member (1) and the second member (2), said method comprising a step (a) of acquiring a reference position, during which the instantaneous position ($\theta$1) of the first member (1) is measured relative to a predetermined origin, and then a conversion step (b) during which the instantaneous position ($\theta$2) of the second member (2) is calculated from the instantaneous position ($\theta$1) of the first member (1), said method comprising a stress measuring step (c) during which a stress value (C1) representative of the instantaneous force transmitted between the first member (1) and the second member (2) through the first link (L1) is collected, and then a correction step (d) during which the conversion step (b) is adapted as a function of said stress value (C1), in order to take into consideration, in the calculation of the position ($\theta$2) of the second member (2), a position offset ($\delta\theta_{L1}$) of the second member (2) relative to the first member (1) which results from the elastic deformation of the first link (L1) under the effect of the force transmitted by said first link, the method being **characterized in that**, during the correction step (d), a correction component ($\delta\theta_{L1}$) representative of a position offset ($\delta\theta_{L1}$) corresponding to the elastic deformation of said first link (L1) under said stress value (C1) is associated with the stress value (C1), according to a predetermined elasticity chart ($A_{L1}$), representative of the elastic behavior of the first link (L1), and **in that** the elasticity chart ($A_{L1}$) is changed according to the wear state of the steering mechanism (4).

2. The method according to claim 1, **characterized in that** the elasticity chart ($A_{L1}$) is changed as a function of the mileage of the vehicle.

3. The method according to claim 1 or 2, **characterized in that** the conversion step (b) comprises a theoretical conversion sub-step (b1), during which a theoretical component of position ($\theta$th2) of the second member (2) is calculated by multiplying the position ($\theta$1) of the first member (1) by the theoretical transmission ratio ($R_{L1}$) of the first link, considered fictitiously as non-deformable, and then a resetting sub-step (b2) during which the correction component ($\delta\theta_{L1}$) coming from the correction step (d) is added to the theoretical component of position of the second member ($\theta$th2) in order to obtain the effective position ($\theta$2) of the second member.

4. The method according to any of the preceding claims, **characterized in that**, during the correction step (d), are taken into consideration behavior laws of the first link (L1) in elastic deformation under stress which are different according to whether the stress value (C1) increases over time, or on the contrary, decreases over time.

5. The method according to any of the preceding claims, **characterized in that** the first member (1) is formed by the shaft of a steering assist motor (M), and **in that**, during the step (a) of acquiring a reference position, the instantaneous angular position ($\theta$1) of said shaft (1) is measured, preferably by means of a position sensor integrated into said motor (M).

6. The method according to any of the preceding claims, **characterized in that** the first member (1) is formed by the shaft of a steering assist motor (M), and **in that**, during the stress measuring step (c), a stress value (C1) which is representative of the assist torque ($C_M$) delivered by the motor, is collected, preferably either by a measurement of the torque exerted by the shaft of the motor or by a measurement of the assist setpoint applied to said motor.

7. The method according to any of the preceding claims **characterized in that** the second member (2) is formed by a steering rack slidably mounted in a steering casing and on which the first member (1) meshes with a pinion (11).

8. The method according to any of the preceding claims, **characterized in that** the steering mechanism (4) is a dual pinion mechanism which comprises an assist motor (M) whose shaft (1) forms the first movable member and engages, by a first link (L1) including a first pinion (11), on a steering rack (2) which is slidably mounted in a steering casing and which forms the second movable member, as well as a steering wheel (3), forming a third movable member which engages the rack (2) by a second link (L2) comprising a second pinion (12), and **in that**, during the step (a) of acquiring a reference position, the instantaneous angular position ($\theta$1) of the shaft of the assist motor is measured and, during the stress measuring step (c), are measured, on the one hand, the assist torque ($C_M$) provided by the assist motor and, on the other hand, the steering wheel torque

$(C_V)$ exerted manually by the driver on the steering wheel (3), so as to be able to determine the angular position $(\theta3)$ of the steering wheel, and/or respectively the angular position of the second pinion $(\theta12)$, by successively calculating the position of the rack $(\theta2)$ from the angular position $(\theta1)$ of the shaft of the assist motor, in taking account of the deformation $(\delta\theta_{L1})$ of the first link (L1) under the effect of the motor torque $(C_M)$, then the angular position $(\theta3)$ of the steering wheel (3), respectively the angular position of the second pinion (12), relative to the position of the rack, in taking account of the deformation $(\delta\theta_{L2})$ of the second link (L2) under the combined effect of the assist torque $(C_M)$ and of the steering wheel torque $(C_V)$.

9. A calculator or a data medium readable by a calculator, containing computer program code elements allowing the implementation of a method according to any one of the preceding claims.

10. A motor vehicle comprising a power steering mechanism which is equipped with a calculator according to claim 9 and/or which is governed by a position determination method according to any one of claims 1 to 8.

**Fig. 1**

**Fig. 2**

**Fig. 3**

Fig. 4

Fig. 5

Fig. 6

**RÉFÉRENCES CITÉES DANS LA DESCRIPTION**

**Documents brevets cités dans la description**

- DE 102012002772